# EUROPÄISCHE PATENTANMELDUNG

(11) **EP 1 128 243 A2**
(43) Veröffentlichungstag der Anmeldung: **29.08.2001**
(21) Anmeldenummer: 01102647.3
(22) Anmeldetag: 07.02.2001
(51) Int. Cl.: G05B 19/402, B23Q 15/22

(54) **Vorrichtung zum Abtasten von Arbeitshöhen**

(30) Priorität: 21.02.2000 DE 10007874
(71) Anmelder: ABA Geräte-u. Maschinenbau GmbH, 39326 Zielitz (DE)
(72) Erfinder: Babai, Attila, 39317 Güsen (DE)
(74) Vertreter: Kagelmann, Manfred, Dipl.-Ing.

(57) **Zusammenfassung**

Die Erfindung betrifft eine Vorrichtung zum Abtasten der Arbeitshöhen, insbesondere bei Wasserstrahl- und Laserschneidanlagen zur Vermeidung von Kollisionsschäden an den Schneidwerkzeugen.
Erfindungsgemäß ist ein Abtastarm(1) dieser Vorrichtung mittels eines Linearmotors(11) in Arbeitsstellung bewegbar und die Auflagekraft des Abtastarmes(1) an jedem Punkt des Hubes in Abhängikeit von einem zu bearbeitenden Material(19) elektrisch oder mechanisch einstellbar und regelbar und/oder auf jeden Punkt des Hubes programmierbar .
Ein Kollisionsschalter(8), in Form eines an sich bekannten induktiven Näherungsschalters, ist von der Linearmotorbaugruppe(13) über ein Hebelgestänge(16) ansteuerbar, wobei das Hebelgestänge(16) einerseits an der Linearmotorbaugruppe(13) gelenkig befestigt ist und dasselbe andererseits in einem Drehpunkt(9) an einer Lagerung(17) lose schwenkbar und längsverschiebbar gelagert ist und wobei die Lagerung(17) mit dem Drehpunkt(9) an einer Verstellspindel(15) angeordnet ist und zur Veränderung des Hebelübersetzungsverhältnisses an dieser Verstellspindel(15) verstellbar ist.

Die Vorrichtung erlaubt mittels des Linearmotors eine präzise Programmierung, Steuerung und Regelung von Auflagekraft des Abtastarmes und Beabstandung des Schneidwerkzeuges vom Schneidgut.
Besonders vorteilhaft ist die Gestaltung der Kollisionschalterbetätigung zur Einstellung der Ansprechempfindlichkeit desselben mittels des in den Übersetzungsverhältnissen veränderlichen Hebelgestänges.

## Beschreibung

Die Erfindung betrifft eine Vorrichtung zum Abtasten der Arbeitshöhen, insbesondere bei Wasserstrahl- und Laserschneidanlagen zur Vermeidung von Kollisionsschäden an den Schneidwerkzeugen.

Bekannt sind solche Vorrichtungen, die manuell vom Bedienpersonal einstellbar und steuerbar sind, und die auch zusätzlich mit Sensoren zur Abtastung der Arbeitshöhen ausgestattet sind. Nachteilig ist daran, daß diese Vorrichtungen eine hohe Aufmerksamkeit des Bedienpersonals erfordern, die Sensoren vom reflektiertem Wasserstrahl oder durch Abrasion leicht beschädigt werden können. Sehr kleinflächige Oberflächenstörungen, wie zum Beispiel durch Grat, Zunder, Tropfresten oder Rost werden damit überhaupt nicht erkannt, was zu schwerwiegenden Beschädigungen der Schneidwerkzeuge führen kann.

Bekannt ist weiterhin eine pneumatische Vorrichtung zur dynamischen Oberflächenabtastung für Wasserstrahl- und Lasersschneidgeräte mit einer Einrichtung zur Vermeidung von Kollisionen.
Nachteilig ist daran, daß die Trägheit des Systems der Meßwerterfassung und der Funktion des pneumatischen Antriebes, bei mechanischer Überlastung im Kollisionfall keinen zuverlässigen Schutz vor Beschädigung des Schneidwerkzeuges bieten. Auch ist das Maß der Ansprechempfindlichkeit einer solche Vorrichtung sowie der Hub und der Auflagekraft des Abtastarmes vom Bedienpersonal nicht einstellbar oder programmierbar, was zur Beschädigung durch Zerkratzen von hochwertigem empfindlichen Material führen kann (DE U1 299 05 304.0)

Aufgabe der Erfindung ist es, eine elektromechanische Vorrichtung zum Abtasten der Arbeitshöhe an Wasserstrahl- und Laserschneidanlagen zu schaffen, deren Auflagekraft des Abtastarmes auf den Schneidgut programmierbar ist und die eine in der Empfindlichkeit einstellbaren, mechanisch nicht überlastbaren Kollosionschutz aufweist.

Erfindungsgemäß wird die Aufgabe wie mit den Ansprüchen angegeben gelöst.

Die Vorzüge der erfindungsgemäßen Vorrichtung bestehen darin, daß die Verwendung eines Linearmotors zur Realisierung der Auflage des Abtastarmes auf dem Schneidgut eine hohe Reaktionsgeschwindigkeit erlauben. Damit ist eine Genauigkeit der Auflagekraft von etwa 0,05 N an jeden Punkt des Hubes realisierbar und auch programmierbar, was wiederum infolge von Reibungsverminderung des Abtastarmes auf dem Schneidgut, unterstützt von der Wasser- oder Druckluftzuführung an der Auflage, eine höhere Arbeitsgeschwindigkeit der Schneidanlage ermöglicht. Verbessert wird damit auch das Andrücke bzw. Niederhalten von dünnem Schneidgut.
In Verbindung mit dem Glasmaßstab und dem optischem Encorder werden, zur Realisierung eines minimalen Abstandes zwischen Schneidwerkzeug und Schneidgut, die Meßwerte dabei gleichzeitig zur Steuerung desselben in an sich bekannter Weise verwertet, wobei sich die Beabstandung mit einer Genauigkeit von etwa 0,01 mm realisieren läßt.

Ein weitere wesentlicher Vorzug der Erfindung besteht darin, daß die Abschaltung der Wasser- oder Laserschneidanlage in Kollisionsfalle rechtzeitig und zuverlässig erfolgt, wobei die Empfindlichkeit des Ansprechverhaltens des Kollisionsschalters auf einfache Weise einstellbar ist und damit der jeweiligen Anwendung angepaßt werden kann.

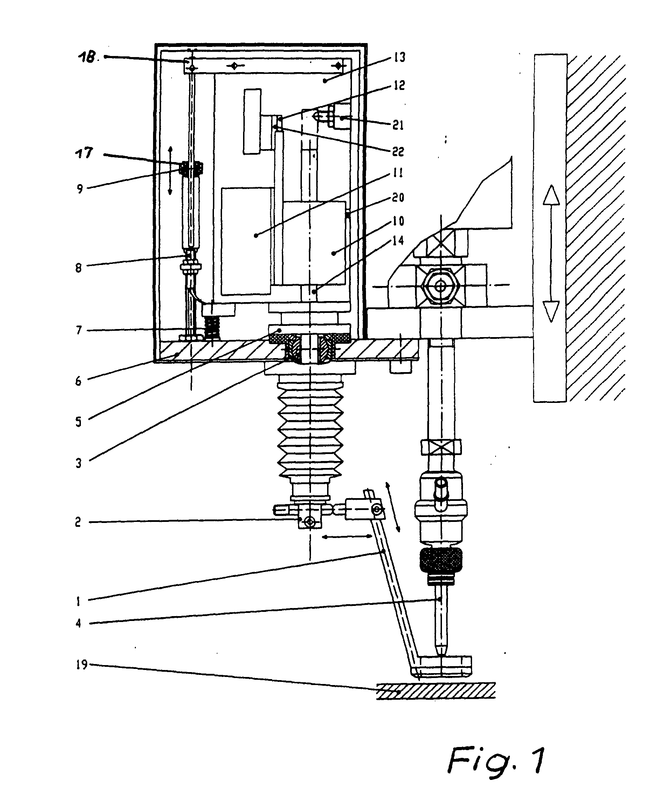

Nachstehend wird die Erfindung an einem Ausführungsbeispiel näher erläutert.
In den zugehörigen Zeichnungen ist mit
- Fig.1: eine Abtastvorrichtung im Querschnitt der Vorderansicht, am Schneidwerkzeughalter der Schneidanlage befestigt und mit

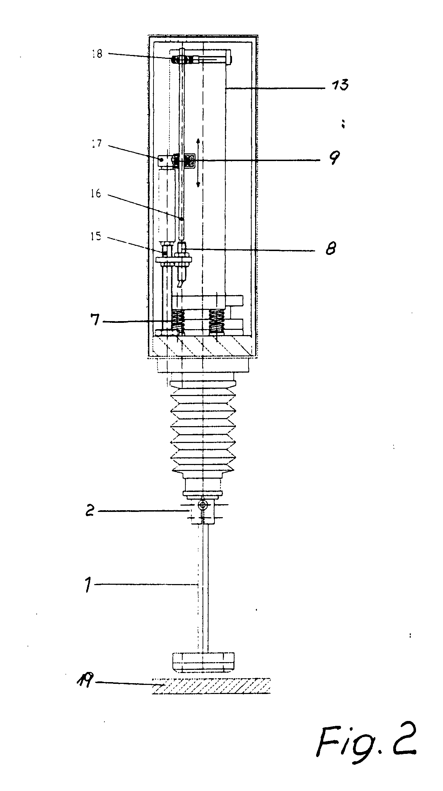

- Fig.2: die Abtastvorrichtung nach Fig.1 im Querschnitt der Seitenansicht im Betriebszustand und mit

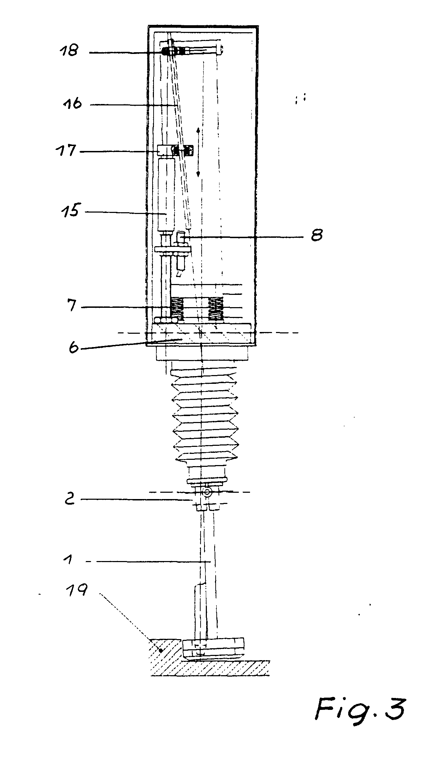

- Fig.3: die Abtastvorrichtung nach Fig.2 im Zustand einer Kollision
schematisch dargestellt.

Am Werkzeughalter mit dem Schneidwerkzeug 4 einer Wasserschneidanlage ist an einem Ausleger 6 desselben, die Liniarmotorbaugruppe 13 angeordnet.

Diese ist mittels des Kugelgelenkes 3 und flexibler Lagerung 5 am Ausleger 6 beweglich gelagert.
Die Linearmotorbaugruppe 13 wird von der Feder 7 zwischen derselben und dem Ausleger 6 abgestützt und in einer definierten Position stabilisiert.
Der Linearmotor 11 ist mittels der Linearführung 10 mit der Linearführungsstange 14 gekoppelt. Die Linearführungsstange 14 reicht durch das Kugelgelenk 3 in Ausleger 6 hindurch und weist an seinem einen Ende den Führungskopf 2 auf, an welchem der Abtastarm 1 in zwei Richtungen verschiebbar und in einer Ebene verdrehbar befestigt ist.
Der Abtastarm ist hohl ausgebildet und weist an seinem oberen Ende einen Wasseranschluß auf. Die ringförmige Auflage dessselben weist auf das Schneidgut 19 gerichtete Wasseraustrittsöffnungen auf.
Innerhalb der Linearmotorbaugruppe 13 befindet sich an der Linearführung 10 der Glasmaßstab 12 welcher mit dem ebenfalls innerhalb der Linearmotorbaugruppe 13 angeordnetem optischen Encorder 22 korrespondiert.

Am Ausleger 6 ist etwa parallel zur Linearführungsstsange 14 die Verstellspindel 15 angeordnet an welcher sich die auf dieser Verstellspindel 15 längs bzw. höhenverstellbare Lagerung 17 mit dem Drehgelenk 9 befindet. Unterhalb dieses Drehgelenkes 9 befindet sich der als induktiver Näherungsschalter ausgebildete Kollisionsschalter 8. An der Linearmotorbaugruppe 13 als solcher ist an dem, dem Kugelgelenk 3 entferntesten Ende desselben, an einem Ausleger das Drehgelenk 18 angeordnet, in welchem das Hebelgestänge 16 kardanisch beweglich gelagert und ist. Dieses Hebelgestänge 15 ist durch das an der höhenverstellbaren Lagerung 17 befindliche Drehgelenk 9 schiebebeweglich hindurch geführt. Im normalen Betriebszustand der Wasserschneidanlage fluchten das Gelenk 18, das Drehgelenk 9 und der Kollisionssschalter 8 miteinander und die Schneidanlage ist über die elektrischen Kontakte des induktiven Näherungssschalters im eingeschalteten Betriebszustand.

Das andere freie Ende des Hebelgestänges 16 ist als Gegenpol des induktiven Näherungsschalters ausgebildet.

Zur Inbetriebnahme der Vorrichtung wird zunächst das Schneidwerkzeug 4 in Position gebracht und Arbeitsabstand des Schneidwerkzeuges 4 zum Schneidgut 19 sowie Auflagekraft des Abtastarmes 1 programmiert bzw.eingestellt. Mittels der Lagerung 17 des Drehpunktes 9 an der Verstellspindel 15 wird die Empfindlichkeit des Kollisionschalters 8 eingestellt, indem die Lagerung 17 nahe oder entfernt von dem Kollisionsschalter 8 positioniert wird und damit jeweils ein anderes Übersetzungsverhältnis des Hebelgestänges 16 realisiert wird. Die Positionierung des Drehpunktes 9 nahe dem Kollisionsschalter 8 bedeutet "unempfindlich" und die Positionierung entfernt dem Kollisionsschalter bedeutet "empfindlich".
Sobald sich die Wasserschneidanlage im Betriebszustand befindet und die Auflage des Abtastarmes 1 dabei auf eine Oberflächenunregelmäßigkeit des Schneidgutes trifft, schwenkt der Abtastarm 1 in eine davon ausweichende Richtung aus und überträgt diesen Ausschlag über die Linearführungsstange 14 auf die Linearmotorbaugruppe 13 und damit über das Gelenk 18 auf das im Drehpunkt 9 geführte Hebelgestänge 16.

Mit dieser Ausschwenkbewgung gerät der Kollisionsschalter 8 aus der Fluchtlinie des Hebelgestänges 16 und schaltet jetzt die Wasserschneidanlage so rechtzeitig außer Betrieb, daß damit eine Beschädigung oder Zerstörung des hochwertigen Wasserschneidwerkzeuges vermieden ist.

### Aufstellung der verwendeten Bezugszeichen

- 1: Abtastarm
- 2: Führungskopf
- 3: Kugelgelenk
- 4: Schneidwerkzeug
- 5: flexible Lagerung
- 6: Ausleger
- 7: Feder
- 8: Kollisionsschalter
- 9: Drehgelenk
- 10: Linearführung
- 11: Linearmotor
- 12: Glasmaßstab
- 13: Linearmotorbaugruppe
- 14: Linearführungsstange
- 15: Verstellspindel
- 16: Hebelgestänge
- 17: Lagerung
- 18: Gelenk
- 19: Schneidgut
- 20: Drehmomentsicherung
- 21: Arretierung
- 22: optischer Encorder

## Patentansprüche

1. Vorrichtung zum Abtasten der Arbeitshöhen insbesondere bei Wasserstrahl- und Laserschneidanlagen mit integriertem Kollisionsschutz, an der Schneidwerkzeugführung befestigt, dadurch gekennzeichnet,
- daß ein Abtastarm (1) dieser Vorrichtung mittels eines Linearmotors(11) in Arbeitsstellung bewegbar ist und die Auflagekraft des Abtastarmes (1) an jedem Punkt des Hubes in Abhängikeit von einem zu bearbeitenden Material(19) elektrisch oder mechanisch einstellbar und regelbar ist und/oder auf jeden Punkt des Hubes programmierbar ist und
- daß an einem Ausleger(6) der Schneidwerkzeugführung die Linearmotorbaugruppe(13) einschließlich der Linearführung(10) mit Linerarführungsstange(14) des Abtastarmes (1) einerseits und der an der Linearführungsstange(14) befindliche Abtastarm(1) andererseits, über eine im Ausleger(6) befindliche flexible Lagerung(5) und/oder ein Kugelgelenk(3) für die bewegliche Lagerung der Linearmotorbaugruppe(13), dort in alle Richtungen beweglich schwenkbar gelagert ist,
wobei die Linearmotorbaugruppe(13) mittels mindestens einer, zwischen dieser und dem Ausleger(6) angeordneten, Feder(7) in einer Neutralstellung stabilisiert ist und
- daß ein Kollisionsschalter(8), in Form eines an sich bekannten induktiven Näherungsschalters, von der Linearmotorbaugruppe(13) über ein, Hebelgestänge(16) ansteuerbar ist und
- daß, das Hebelgestänge(16) einerseits an der Linearmotorbaugruppe(13) gelenkig befestigt ist' und dasselbe andererseits in einem Drehpunkt(9) an einer Lagerung(17) lose schwenkbar und längsverschiebbar geführt ist, wobei die Lagerung(17) mit dem Drehpunkt(9) an einer Verstellspindel(15) angeordnet ist und zur Veränderung des Hebelübersetzungsverhältnisses an dieser Verstellspindel(15) verstellbar ist.

2. Vorrichtung nach Anspruch 1, dadurch gekennzeichnet, daß die Linearführungsstange(14) der Linearführung(10) eine Drehmomentsicherung(20) aufweist.

3. Vorrichtung nach Anspruch 1 und 2, dadurch gekennzeichnet, daß der Abtastarm(1) oder dessen Befestigung am Führungskopf(2) eine Soll-Bruchstelle aufweist.

4. Vorrichtung nach den Ansprüchen 1 bis 3, dadurch gekennzeichnet, daß der Abtastarm (1) am Führungskopf(2) höhen- sowie tiefenverstellbar und schwenkbar angeordnet ist.

5. Vorrichtung nach den Ansprüchen 1 bis 4, dadurch gekennzeichnet, daß der Abtastarm(1) hohl ausgebildet ist oder mit einer Wasser- oder Druckluftzuführung zu seiner Auflagestelle versehen ist.

6. Vorrichtung nach den Ansprüchen 1 bis 5, dadurch gekennzeichnet, daß in der Linearmotorbaugruppe(13) ein Glasmaßstab(12) und ein optischer Encorder(22) zur Steuerung des Linearmotors(10) von Position, Geschwindigkeit und Beschleunigung der Linearführungsstange(14) angeordnet ist.

7. Vorrichtung nach den Ansprüchen 1 bis 6, dadurch gekennzeichnet, daß die Linearführungsstange(14) im Ruheposition mittels einer Arretierung(21) arretierbar ist.
